# EUROPEAN PATENT APPLICATION

(11) **EP 4 851 792 A1**
(43) Date of publication of application: **09.12.2026**
(21) Application number: 24921544.3
(22) Date of filing: 23.10.2024
(51) Int. Cl.: G06F 9/451

(54) **DISPLAY CONTROL METHOD, STORAGE MEDIUM, AND COMPUTER DEVICE**

(30) Priority: 04.02.2024 CN 202410169000
(71) Applicant: Shenzhen TCL Digital Technology Ltd., Shenzhen, Guangdong 518054 (CN)
(72) Inventor: HUANG, Wenzhong, Shenzhen Guangdong 518054 (CN)
(74) Representative: Herrero & Asociados, S.L.
(86) International application number: PCT/CN2024/126744
(87) International publication number: WO 2025/161520

(57) **Abstract**

Disclosed in embodiments of the present application are a display control method, a storage medium, and a computer device. The method comprises: displaying a whiteboard interface; determining a current display area in a display state in a whiteboard page that has undergone a non-drawing operation; determining a content area containing all drawn contents in the whiteboard page; determining a target area; on the basis of a control display area of a preview control and the target area, determining a control display position of the target area in the preview control; and displaying the target area in the control display position.

## Description

This application claims priority to Chinese Patent Applications No. 202410169000.8, filed on February 4, 2024 and entitled "DISPLAY CONTROL METHOD, STORAGE MEDIUM, AND COMPUTER DEVICE". The entire disclosures of the above application are incorporated herein by reference.

### TECHNICAL FIELD

The present application relates to the field of information processing technologies, and more particularly, to a display control method, an apparatus, and a computer-readable storage medium.

### BACKGROUND TECHNOLOGY

With the rapid development of technology, people's work and daily lives have become increasingly dependent on electronic devices. Among such devices, electronic whiteboards are being used in an increasing number of scenarios. In particular, in commercial display devices, whiteboard applications are essentially indispensable and, in many cases, have become an important factor in evaluating the value and competitiveness of such devices.

In the related art, whiteboard applications generally support operations such as scaling and panning a canvas to provide users with a larger drawing area. In particular, some whiteboard applications support an infinite canvas, allowing users to pan the canvas without limitation.

### Technical Problem

In order to enable a user to quickly determine the relative position of a currently displayed area within an entire whiteboard page during zooming or panning operations, a preview control is provided. However, for example, when the user continuously pans the whiteboard page, an indicator used in the preview control to indicate the current display area (e.g., displaying the current display area in blue within the preview control) may move outside a control display area of the preview control as a result of the panning operation. Consequently, the user may be unable to determine the relative position of the current display area within the whiteboard page, thereby degrading the user experience.

### SUMMARY OF INVENTION

Embodiments of the present application provide a display control method, apparatus, and computer-readable storage medium, which can avoid the problem that a user is unable to determine the relative position of a current display area within a whiteboard page, thereby improving the user experience.

To solve the foregoing technical problem, embodiments of the present application provide the following technical solutions.

A display control method, comprising:
Displaying a whiteboard interface, wherein the whiteboard interface is configured to display a display area currently in a display state in a whiteboard page.

In response to a non-drawing operation performed on the whiteboard interface, determining a current display area that is in the display state in the whiteboard page after the non-drawing operation.

Determining a content area containing all drawn content in the whiteboard page.

Determining, based on the current display area and the content area, a target area, wherein the target area is a minimum area containing the current display area and the content area.

Determining, based on a control display area of a preview control and the target area, a control display position of the target area in the preview control.

Displaying the target area at the control display position.

A display control apparatus, comprising:
A first display module configured to display a whiteboard interface, wherein the whiteboard interface is configured to display a display area currently in a display state in a whiteboard page.

A first determination module configured to, in response to a non-drawing operation performed on the whiteboard interface, determine a current display area that is in the display state in the whiteboard page after the non-drawing operation.

A second determination module configured to determine a content area containing all drawn content in the whiteboard page.

A third determination module configured to determine, based on the current display area and the content area, a target area, wherein the target area is a minimum area containing the current display area and the content area.

A fourth determination module configured to determine, based on a control display area of a preview control and the target area, a control display position of the target area in the preview control.

A second display module configured to display the target area at the control display position.

In some embodiments, the fourth determination module comprises:
A first determination submodule configured to determine, according to a first size of the target area in the whiteboard page and a second size of the control display area, a scaling ratio for displaying the target area within the control display area.
A second determination submodule configured to determine a transformation matrix based on the first size, the second size, and the scaling ratio.
A third determination submodule configured to determine the control display position of the target area in the preview control according to the transformation matrix.

In some embodiments, the first size comprises a first width and a first height, and the second size comprises a second width and a second height. The first determination submodule is configured to:
Calculate a ratio of the first width to the second width to obtain a width ratio.
Calculate a ratio of the first height to the second height to obtain a height ratio.

Compare the width ratio and the height ratio and determine a larger one thereof as the scaling ratio.

In some embodiments, the second determination submodule is configured to:
Calculate a ratio of the first width to the scaling ratio to obtain a target width of the target area within the control display area.
Calculate a ratio of the first height to the scaling ratio to obtain a target height of the target area within the control display area.
Calculate one-half of a difference between the second width and the target width to obtain a target horizontal coordinate of an upper-left vertex of the target area within the control display area.
Calculate one-half of a difference between the second height and the target height to obtain a target vertical coordinate of the upper-left vertex of the target area within the control display area.

Determine the target horizontal coordinate and the target vertical coordinate as a first coordinate of the upper-left vertex of the target area in the preview control.

Determine the transformation matrix based on a second coordinate of the upper-left vertex of the target area in the whiteboard page, the first coordinate, and the scaling ratio.

In some embodiments, the apparatus further comprises:
A fifth determination module configured to determine whether a non-drawing operation is received for a first time.

A rendering module configured to, in response to determining that the non-drawing operation is received for the first time, render the content area and store the rendered content area in a designated storage area, and disable display of the preview control.

In some embodiments, the apparatus further comprises:
An acquisition module configured to, in response to determining that the non-drawing operation is not received for the first time, obtain the rendered content area from the designated storage area during the display of the target area at the control display position, and display the content area at a target position corresponding to the content area within the control display area.

In some embodiments, the current display area within the preview control is displayed in a specified style, and the apparatus further comprises:
A sixth determination module configured to, in response to a non-drawing operation performed on the current display area displayed in the specified style within the preview control, determine a current position of the current display area in the preview control.

A seventh determination module configured to determine an inverse transformation matrix according to the transformation matrix.

An eighth determination module configured to determine, based on the current position and the inverse transformation matrix, a changed position of the current display area in the whiteboard page.

An adjustment module configured to adjust the current display area in the whiteboard page to the changed position.

A non-transitory computer-readable storage medium storing a plurality of instructions thereon, wherein the instructions, when loaded and executed by a processor, cause the processor to perform the steps of the display control method described above.

A computer device, comprising: a memory; a processor; and a computer program stored in the memory and executable by the processor, wherein execution of the computer program by the processor causes the processor to perform the steps of the display control method described above.

A computer program product or a computer program comprising computer instructions, wherein the computer instructions are stored in a storage medium, and wherein a processor of a computer device reads and executes the computer instructions such that the computer device performs the steps of the display control method described above.

### Advantageous Effects

According to embodiments of the present application, a whiteboard interface is displayed, wherein the whiteboard interface is configured to display a display area currently in a display state in a whiteboard page; in response to a non-drawing operation performed on the whiteboard interface, a current display area that is in the display state after the non-drawing operation is determined; a content area containing all drawn content in the whiteboard page is determined; a target area is determined based on the current display area and the content area, wherein the target area is a minimum area containing the current display area and the content area; a control display position of the target area in a preview control is determined based on a control display area of the preview control and the target area; and the target area is displayed at the control display position. Accordingly, each time a user performs a non-drawing operation, a target area is determined and the target area, including both the current display area and the content area, is completely displayed within the preview control. As a result, the problem that the user is unable to determine the relative position of the current display area within the whiteboard page is avoided, thereby improving the user experience.

### BRIEF DESCRIPTION OF THE DRAWINGS

To more clearly illustrate the technical solutions of the embodiments of the present application, the drawings used in describing the embodiments are briefly introduced below. It should be understood that the drawings described below illustrate only certain embodiments of the present application, and that other drawings may be derived therefrom by those skilled in the art without the exercise of inventive skill.
FIG. 1 is a schematic diagram of a display control system according to an embodiment of the present application.
FIG. 2 is a flowchart of a display control method according to an embodiment of the present application.
FIG. 3 is a first schematic diagram of a whiteboard page according to an embodiment of the present application.
FIG. 4 is a second schematic diagram of a whiteboard page according to an embodiment of the present application.
FIG. 5 is a third schematic diagram of a whiteboard page according to an embodiment of the present application.
FIG. 6 is a schematic diagram illustrating determination of a first coordinate of an upper-left vertex of a target area within a control display area according to an embodiment of the present application.
FIG. 7 is a schematic diagram illustrating display of a preview control according to an embodiment of the present application.
FIG. 8 is a schematic diagram illustrating an overall design of a preview control according to an embodiment of the present application.
FIG. 9 is a signaling diagram illustrating initialization of a preview control according to an embodiment of the present application.
FIG. 10 is a structural diagram of a display control apparatus according to an embodiment of the present application.
FIG. 11 is a structural diagram of a terminal according to an embodiment of the present application.

### DETAILED DESCRIPTION OF THE PREFERRED EMBODIMENTS

The technical solutions of the embodiments of the present application are described clearly and completely below with reference to the accompanying drawings. It should be understood that the described embodiments are merely some embodiments, rather than all embodiments, of the present application. Based on the embodiments disclosed herein, all other embodiments that can be derived by a person of ordinary skill in the art without inventive effort shall fall within the scope of protection of the present application.

Embodiments of the present application provide a display control method, an apparatus, and a computer-readable storage medium.

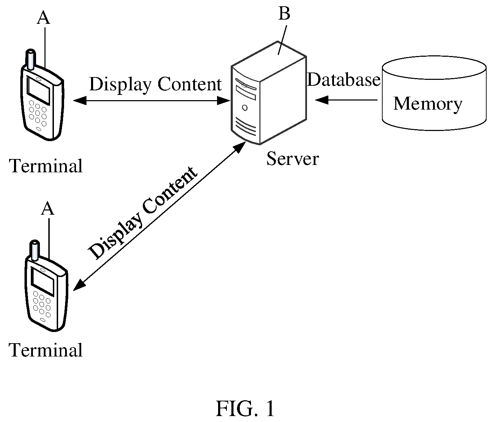

Referring to FIG. 1, FIG. 1 is a schematic diagram illustrating a scenario of a content display system according to an embodiment of the present application. The content display system includes a terminal A and a server B. The terminal A and the server B may be connected through a communication network. The communication network may include a wireless network and/or a wired network. The wireless network may include one or more of a wireless wide area network (WWAN), a wireless local area network (WLAN), a wireless metropolitan area network (WMAN), and a wireless personal area network (WPAN). The network may further include network entities such as routers and gateways, which are omitted from FIG. 1 for simplicity. The terminal A may exchange information with the server B through the communication network. For example, the server B may transmit display content to different terminals A for presentation.

The content display system may include a content display apparatus. The content display apparatus may be integrated into a terminal having a storage unit and a microprocessor capable of performing computations, such as a tablet computer, a mobile phone, a notebook computer, or a desktop computer. In FIG. 1, such a terminal corresponds to terminal A. Various application programs required by users may be installed in terminal A, such as educational application software and video presentation application software. The terminal A may be configured to display a whiteboard interface, wherein the whiteboard interface is configured to display a display area currently in a display state in a whiteboard page; in response to a non-drawing operation performed on the whiteboard interface, determine a current display area that is in the display state in the whiteboard page after the non-drawing operation; determine a content area containing all drawn content in the whiteboard page; determine, based on the current display area and the content area, a target area, wherein the target area is a minimum area containing the current display area and the content area; determine, based on a control display area of a preview control and the target area, a control display position of the target area in the preview control; and display the target area at the control display position.

The server B may be an independent physical server, a server cluster composed of multiple physical servers, a distributed system, or a cloud server providing basic cloud-computing services, such as cloud services, cloud databases, cloud computing, cloud functions, cloud storage, network services, cloud communications, middleware services, domain name services, security services, content delivery network (CDN) services, big-data services, and artificial-intelligence platform services. The server B may be configured to store and distribute display content.

It should be noted that the scenario of the content display system illustrated in FIG. 1 is merely an example. The content display system and scenarios described in the embodiments of the present application are provided for the purpose of clearly explaining the technical solutions of the embodiments and do not limit the technical solutions of the present application. A person of ordinary skill in the art will appreciate that, as content display systems evolve and new service scenarios emerge, the technical solutions provided by the embodiments of the present application are likewise applicable to similar technical problems.

It should also be noted that certain processes described in the specification, claims, and accompanying drawings include a plurality of steps presented in a particular order. However, it should be understood that such steps may be performed in an order different from that described herein or may be performed in parallel. The step numbers are provided merely for distinguishing different steps and do not imply any particular execution order. Furthermore, terms such as "first," "second," and "target" are used to distinguish similar objects and are not intended to indicate a particular sequence or priority.

The embodiments are described in detail below.

Embodiments of the present application provide a display control method, which may be performed by a terminal.

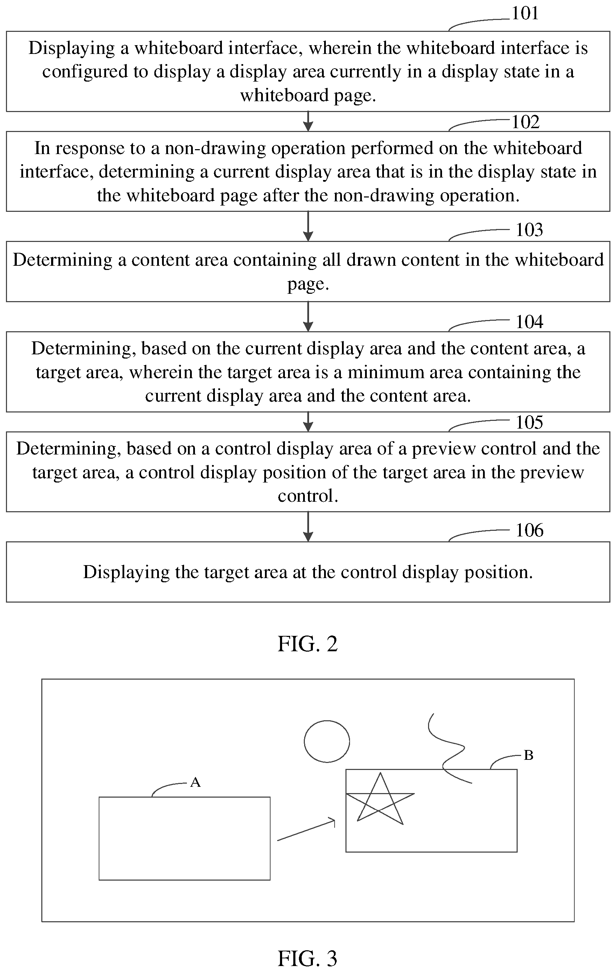

Referring to FIG. 2, FIG. 2 is a flowchart illustrating a display control method according to an embodiment of the present application. The display control method includes the following steps.

At step 101, a whiteboard interface is displayed, wherein the whiteboard interface is configured to display a display area currently in a display state in a whiteboard page.

With the rapid development of electronic technologies, intelligent interactive flat panels have been widely used in fields such as education and conferences, greatly facilitating people's work and study. In practical use, an intelligent interactive flat panel displays presentation content, which corresponds to the whiteboard interface. The whiteboard interface includes a display area of the whiteboard page that is currently in a display state and a toolbar positioned above the whiteboard page. The display area may contain educational content, conference content, or other information. A user may control different regions of the whiteboard page to serve as the display area through operations such as sliding or zooming.

At step 102, in response to a non-drawing operation performed on the whiteboard interface, a current display area that is in the display state in the whiteboard page after the non-drawing operation is determined.

Operations that may be performed by a user on the whiteboard interface include two types. A first type is a drawing operation, such as drawing, writing, or sketching on the whiteboard page. A second type is a non-drawing operation, such as panning or zooming the whiteboard page.

Specifically, because a non-drawing operation is used to change the content displayed in the whiteboard interface, each non-drawing operation changes the display area that is in the display state within the whiteboard page. Accordingly, in response to detecting a non-drawing operation performed on the whiteboard interface, the current display area that is in the display state after completion of the non-drawing operation is determined.

As shown in FIG. 3, FIG. 3 is a first schematic diagram of a whiteboard page according to an embodiment of the present application. Taking as an example a case in which the display area is area A before a non-drawing operation is performed, when a user slides a finger on the whiteboard interface such that the whiteboard page as a whole is panned toward the lower-left direction, and the display is ultimately fixed at area B, area B is the current display area that is in the display state in the whiteboard page after the non-drawing operation.

In some embodiments, after the step of responding to a non-drawing operation performed on the whiteboard interface, the method further comprises:
(1) Determining whether the non-drawing operation is received for a first time.
(2) In response to determining that the non-drawing operation is received for the first time, rendering the content area and storing the rendered content area in a designated storage area, and disabling display of the preview control.

In order to improve the speed at which the content area is subsequently displayed in the control display area of the preview control, the present application renders the content area and stores the rendered content area in the designated storage area. Accordingly, when the content area is subsequently to be displayed in the control display area of the preview control, the previously rendered content area may be directly retrieved from the designated storage area and placed into the control display area, thereby trading storage space for rendering time.

Specifically, after responding to the non-drawing operation performed on the whiteboard interface, it is determined whether the non-drawing operation is the first non-drawing operation received since the whiteboard interface was opened. If so, the preview control is not displayed during the current non-drawing operation, and the content area is rendered and stored in the designated storage area.

The designated storage area may be a cached bitmap, the dimensions of which may be the same as the second size of the control display area of the preview control. When the content area can be completely rendered into the cached bitmap without scaling, all drawn content may be rendered into the cached bitmap with an upper-left corner of the content area aligned with an upper-left corner of the cached bitmap. When the content area cannot be completely rendered into the cached bitmap without scaling down, a scaling ratio of the content area may be calculated, and all drawn content may then be rendered into the cached bitmap with the upper-left corner of the content area aligned with the upper-left corner of the cached bitmap.

At step 103, a content area containing all drawn content in the whiteboard page is determined.

The content area is the minimum area within the whiteboard page that contains all content drawn by the user.

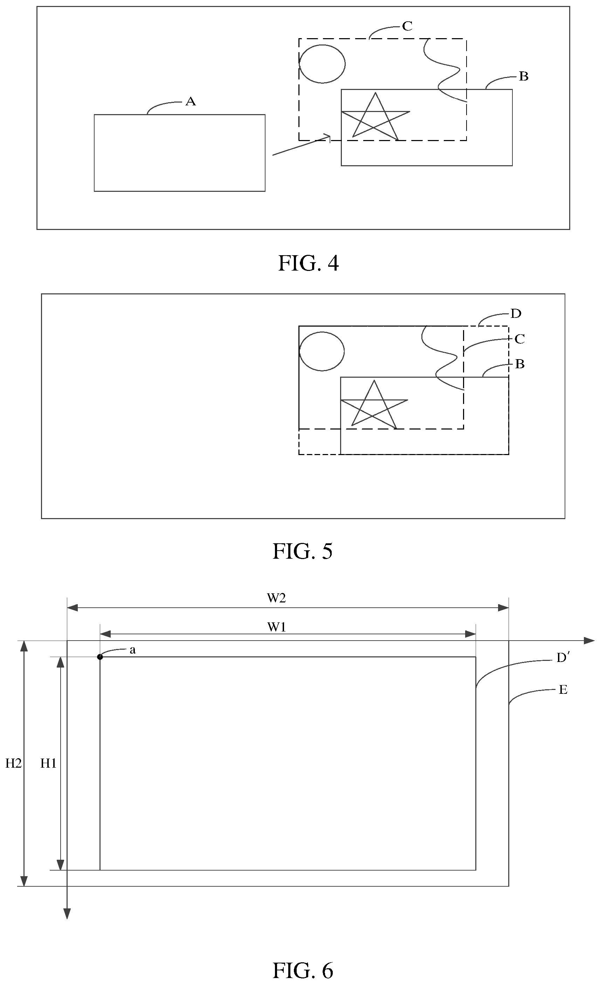

Referring to FIG. 4, FIG. 4 is a second schematic diagram of a whiteboard page according to an embodiment of the present application. In the whiteboard page shown in FIG. 4, three drawn contents are present, namely a circle, a wavy line, and a five-pointed star. The smallest area containing the circle, the wavy line, and the five-pointed star, namely area C, is determined as the content area.

At step 104, a target area is determined based on the current display area and the content area, wherein the target area is the minimum area containing the current display area and the content area.

After the current display area is determined in step 102 and the content area is determined in step 103, in order to completely display both the current display area and the content area within the preview control, it is necessary to determine the minimum area containing the current display area and the content area. Such area is referred to as the target area.

Referring to FIG. 5, FIG. 5 is a third schematic diagram of a whiteboard page according to an embodiment of the present application. In FIG. 5, area B is the current display area and area C is the content area. The minimum area containing both area B and area C is area D. Accordingly, area D is determined as the target area.

At step 105, a control display position of the target area in the preview control is determined based on a control display area of the preview control and the target area.

The preview control is a control configured to present the whiteboard page in a scaled form. Since the target area is to be displayed in a scaled manner within the control display area of the preview control, it is necessary to determine the control display position of the target area within the preview control.

In some embodiments, the step of determining the control display position of the target area in the preview control based on the control display area of the preview control and the target area comprises:
(1) Determining, according to a first size of the target area in the whiteboard page and a second size of the control display area, a scaling ratio for displaying the target area within the control display area,
(1) Determining a transformation matrix based on the first size, the second size, and the scaling ratio.
(1) Determining the control display position of the target area in the preview control according to the transformation matrix.

Since the user's non-drawing operation may include a panning operation and/or a zooming operation, and different transformation matrices correspond to the different operations, the transformation matrix is first determined in order to determine the control display position of the target area in the preview control.

Specifically, the transformation matrix may be determined by: determining an actual size of the target area in the whiteboard page, namely the first size; determining an actual size of the control display area in the preview control, namely the second size; determining a scaling ratio according to the first size and the second size; determining a transformation matrix based on the first size, the second size, and the scaling ratio; and determining the control display position of the target area in the preview control according to the transformation matrix.

In some embodiments, the first size comprises a first width and a first height, and the second size comprises a second width and a second height. The step of determining the scaling ratio comprises:
(1.1) Calculating a ratio of the first width to the second width to obtain a width ratio.
(1.2) Calculating a ratio of the first height to the second height to obtain a height ratio.
(1.3) Comparing the width ratio and the height ratio and determining a larger one thereof as the scaling ratio.

Since both the target area and the control display area are rectangular, the scaling ratio may be determined according to the width and height of the rectangles. First, a ratio of the width of the target area (i.e., the first width) to the width of the control display area (i.e., the second width) is calculated to obtain a width ratio. Then, a ratio of the height of the target area (i.e., the first height) to the height of the control display area (i.e., the second height) is calculated to obtain a height ratio. To ensure that the target area is completely displayed within the control display area, the larger one of the width ratio and the height ratio is selected as the scaling ratio.

For example, if the first width is 10 cm, the first height is 4 cm, the second width is 5 cm, and the second height is 4 cm, then the width ratio is 10/5 = 2, and the height ratio is 4/4 = 1. Since the width ratio is larger, the scaling ratio is determined to be 2. After scaling, the width of the target area becomes 5 cm and the height becomes 2 cm, thereby ensuring that the entire width of the target area can be displayed within the control display area.

In some embodiments, the step of determining the transformation matrix based on the first size, the second size, and the scaling ratio comprises:
(1.1) Calculating a ratio of the first width to the scaling ratio to obtain a target width of the target area within the control display area.
(1.1) Calculating a ratio of the first height to the scaling ratio to obtain a target height of the target area within the control display area.
(1.3) Calculating one-half of a difference between the second width and the target width to obtain a target horizontal coordinate of an upper-left vertex of the target area within the control display area,
(1.4) Calculating one-half of a difference between the second height and the target height to obtain a target vertical coordinate of the upper-left vertex of the target area within the control display area.
(1.5) Determining the target horizontal coordinate and the target vertical coordinate as a first coordinate of the upper-left vertex of the target area in the preview control.
(1.6) Determining the transformation matrix based on a second coordinate of the upper-left vertex of the target area in the whiteboard page, the first coordinate, and the scaling ratio.

Specifically, the transformation matrix may be determined by calculating a ratio of the first width to the scaling ratio to obtain a target width of the target area within the control display area; calculating a ratio of the first height to the scaling ratio to obtain a target height of the target area within the control display area; calculating one-half of a difference between the second width and the target width to obtain a target horizontal coordinate of the upper-left vertex of the target area within the control display area; calculating one-half of a difference between the second height and the target height to obtain a target vertical coordinate of the upper-left vertex of the target area within the control display area; determining the target horizontal coordinate and the target vertical coordinate as a first coordinate of the upper-left vertex of the target area in the preview control; and determining the transformation matrix based on a second coordinate of the upper-left vertex of the target area in the whiteboard page, the first coordinate, and the scaling ratio.

Referring to FIG. 6, FIG. 6 is a schematic diagram illustrating determination of a first coordinate of an upper-left vertex of a target area within a control display area according to an embodiment of the present application. In FIG. 6, area E represents the control display area having a width W2 and a height H2, and area D' represents a display area of the target area within the control display area, having a width W1 and a height H1. In order to determine the first coordinate of the upper-left vertex of the target area within the control display area (i.e., the coordinate of point a in FIG. 6), one-half of a difference between W2 and W1 is calculated to obtain a target horizontal coordinate of the upper-left vertex of the target area within the control display area. Similarly, one-half of a difference between H2 and H1 is calculated to obtain a target vertical coordinate of the upper-left vertex of the target area within the control display area. Accordingly, the horizontal and vertical coordinates of point a are determined. After the first coordinate of point a has been determined, the transformation matrix may be determined based on the second coordinate of the upper-left vertex of the target area in the whiteboard page and the scaling ratio.

In some embodiments, the transformation matrix is determined based on the second coordinate of the upper-left vertex of the target area in the whiteboard page, the first coordinate, and the scaling ratio as follows.

If the non-drawing operation is a panning operation: a difference between the target horizontal coordinate and the horizontal coordinate of the second coordinate is calculated to obtain a horizontal translation amount.

A difference between the target vertical coordinate and the vertical coordinate of the second coordinate is calculated to obtain a vertical translation amount.

The transformation matrix is determined based on the horizontal translation amount and the vertical translation amount.

For example, if the first coordinate is (10, 5) and the second coordinate is (6, 4), then the horizontal translation amount is 10 - 6 = 4 and the vertical translation amount is 5 - 4 = 1. Accordingly, the transformation matrix is N(4, 1).

If the non-drawing operation is a zooming operation, the transformation matrix is: M(scaling ratio, horizontal coordinate of the second coordinate, vertical coordinate of the second coordinate).

For example, if the scaling ratio is 2, the horizontal coordinate of the second coordinate is 3, and the vertical coordinate of the second coordinate is 4, then the transformation matrix is M(2, 3, 4).

If the non-drawing operation includes both a panning operation and a zooming operation, the transformation matrix is a product of a translation transformation matrix and a scaling transformation matrix.

For example, if the translation transformation matrix is N(4, 1) and the scaling transformation matrix is M(2, 3, 4), then the resulting transformation matrix is: N(4, 1) * M(2, 3, 4).

At step 106, the target area is displayed at the control display position.

After the control display position is determined in step 105, each point in the target area may be displayed within the control display position according to the control display position calculated based on the transformation matrix.

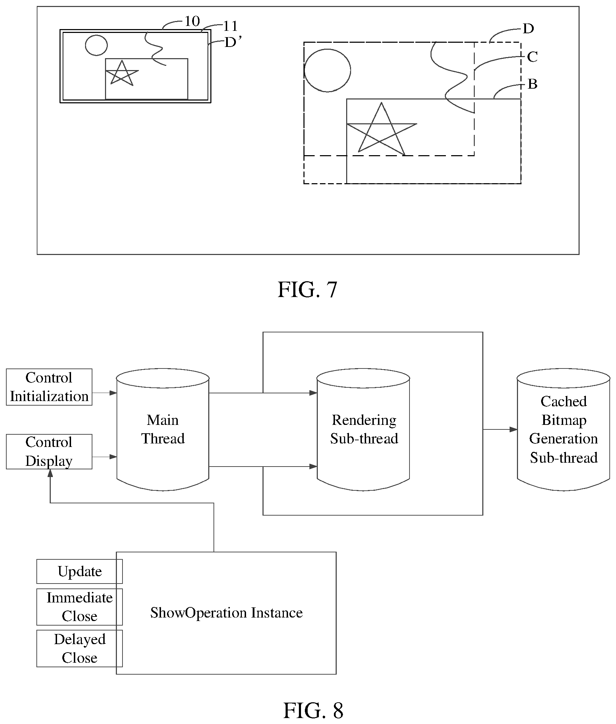

Referring to FIG. 7, FIG. 7 is a schematic diagram illustrating display of a preview control according to an embodiment of the present application. The preview control 10 shown in FIG. 7 includes a control display area 11. A scaled image D' corresponding to target area D, which includes content area C and current display area B of the whiteboard page, is displayed within the control display area 11.

In some embodiments, the method further comprises:
In response to determining that the non-drawing operation is not received for the first time, obtaining the rendered content area from the designated storage area during the display of the target area at the control display position, and displaying the content area at a target position corresponding to the content area within the control display area.

Specifically, if it is determined that the currently received non-drawing operation is not the first non-drawing operation since the whiteboard interface was opened, then, during display of the target area at the control display position, the pre-rendered content area may be obtained from the designated storage area. Since the target area includes the content area, the content area may be displayed at a corresponding target position within the control display area.

The target position corresponding to the content area within the control display area may likewise be calculated based on coordinate information of the content area and the transformation matrix, and therefore will not be described in further detail herein.

In some embodiments, the current display area within the preview control is displayed in a specified style. After displaying the target area at the control display position, the method further comprises:
(1) In response to a non-drawing operation performed on the current display area displayed in the specified style within the preview control, determining a current position of the current display area in the preview control.
(2) Determining an inverse transformation matrix according to the transformation matrix.
(3) Determining, based on the current position and the inverse transformation matrix, a changed position of the current display area in the whiteboard page.
(4) Adjusting the current display area in the whiteboard page to the changed position.

The current display area within the preview control may be displayed in a specified style, such as a highlighted display style. A user may perform a non-drawing operation, such as panning and/or zooming, on the current display area displayed in the specified style within the preview control, thereby reversely controlling the current display area of the whiteboard page through the preview control. After the non-drawing operation is performed, the current position of the current display area in the preview control is determined. An inverse transformation matrix is then determined based on the transformation matrix. A changed position of the current display area within the whiteboard page is determined according to the current position and the inverse transformation matrix. Finally, the current display area in the whiteboard page is adjusted to the changed position.

Specifically, the inverse transformation matrix may be determined according to the transformation matrix as follows: for a translation transformation matrix, sign inversion is performed on the numerical values of the translation transformation matrix to obtain an inverse translation transformation matrix; and for a scaling transformation matrix, a reciprocal operation is performed on the scaling ratio of the scaling transformation matrix to obtain an inverse scaling transformation matrix.

For example, if the transformation matrix is: N(3, 4) * M(1.5, -1, -2), the corresponding inverse transformation matrix is: M(2/3, -1, -2) * N(-3, -4).

As described above, embodiments of the present application display a whiteboard interface, wherein the whiteboard interface is configured to display a display area currently in a display state in a whiteboard page; determine, in response to a non-drawing operation performed on the whiteboard interface, a current display area that is in the display state after the non-drawing operation; determine a content area containing all drawn content in the whiteboard page; determine a target area based on the current display area and the content area, wherein the target area is a minimum area containing the current display area and the content area; determine a control display position of the target area in a preview control based on a control display area of the preview control and the target area; and display the target area at the control display position. Accordingly, each time a user performs a non-drawing operation, a target area is determined and the target area, including both the current display area and the content area, is completely displayed within the preview control. As a result, the problem that the user is unable to determine the relative position of the current display area within the whiteboard page is avoided, thereby improving the user experience.

Referring to FIG. 8, FIG. 8 is a schematic diagram illustrating an overall design of a preview control according to an embodiment of the present application. The preview control includes two primary functions: a control initialization function and a display control function.

The control initialization function operates as follows. When a whiteboard page is opened, an external interface method init() of a global view control is first invoked to initialize the control. The initialization process mainly includes: initializing internal data and states of the control; starting a rendering sub-thread and waiting for control-update rendering tasks; starting a cached bitmap rendering sub-thread and waiting for tasks for completely rendering whiteboard elements into a cached bitmap; and monitoring lifecycle state changes of the whiteboard page and actively performing operations such as resetting internal data and states, interrupting rendering tasks, stopping the rendering sub-thread, and stopping the cached bitmap rendering sub-thread when the whiteboard page is closed.

The display control function operates as follows. When a user starts zooming or panning the whiteboard canvas, an external interface method show() provided by the control is invoked to display the control and obtain a ShowOperation instance. The ShowOperation instance mainly provides the following functions: when the user continues zooming or panning the canvas, an external interface method update() provided by the ShowOperation instance is invoked to update display of the global view control; when the user releases a touch input and stops zooming or panning the canvas, an external interface method closeDelay() provided by the ShowOperation instance is invoked to automatically hide the global view after a delay of three seconds; and when the user performs another operation, such as writing, erasing, clicking a toolbar button, or switching pages, and the global view needs to be hidden immediately, an external interface method closeImmediately() provided by the ShowOperation instance is invoked. After the global view control has been hidden, the show() method must be invoked again before the next zooming or panning operation.

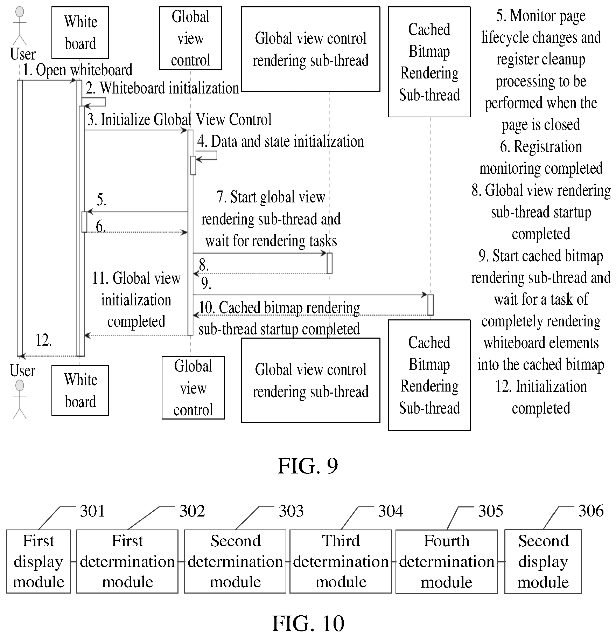

Referring to FIG. 9, FIG. 9 is a signaling diagram illustrating initialization of a preview control according to an embodiment of the present application. After a user launches a whiteboard application, the whiteboard enters an initialization stage and initializes the preview control (i.e., the global view control). The preview control is triggered to enter a data and state initialization stage. The preview control monitors lifecycle changes of the whiteboard page and registers with the whiteboard to perform cleanup processing when the whiteboard page is closed. After registration is completed, the preview control starts a preview-control rendering sub-thread and waits for rendering tasks. After the rendering sub-thread has started, a cached bitmap rendering sub-thread is started and waits for tasks for completely rendering the content area (i.e., whiteboard elements) into the cached bitmap. After the cached bitmap rendering sub-thread has started, initialization of the preview control is completed, and initialization of the whiteboard is completed.

After initialization of the preview control is completed, when a user begins performing a non-drawing operation, the whiteboard invokes show() to start a display procedure. The preview control obtains whiteboard page background information, scaling information, and an element-rendering snapshot list from the whiteboard page. Internal data and states of the preview control are updated, including calculation of a size and position of the content area, and control rendering information is generated. A rendering procedure of the preview control is then triggered. A preview-control rendering sub-thread renders a background and a foreground until rendering is completed. The preview control triggers rendering of a cached bitmap, and a cached-bitmap rendering sub-thread traverses the whiteboard-element rendering snapshot list and renders the elements to designated positions within the cached bitmap. After rendering is completed, a control state of the preview control is updated. The preview control then triggers the control-rendering sub-thread to refresh display of the control. The control-rendering sub-thread renders the background, renders the cached bitmap into a target area of the preview control, and renders the foreground. The preview control is notified that rendering has been completed, and updating of the control state is completed. The cached-bitmap rendering task is then completed. An instance, ShowOperation, for updating the preview control is generated, such that the instance is displayed in the preview control.

While the preview control is being displayed, an update interface update() is invoked to update display of the control. A delayed-close task for automatically hiding the preview control after a preset delay period (e.g., three seconds) is removed. Latest rendering information is generated, and the preview control is triggered to update rendering. The preview-control rendering sub-thread renders the background, renders the cached bitmap into the target area of the preview control, and renders the foreground. The preview control is notified that rendering has been completed, and updating of the control state is completed.

When the user stops performing the non-drawing operation, a delayed-close interface closeDelay() is invoked to cause the preview control to be automatically hidden after a preset delay period. The ShowOperation interface triggers a delayed-close task. If the delayed-close task is not canceled before expiration of the preset delay period, the preview control is hidden, the control state is reset, and the operation is terminated.

When the user performs a non-drawing operation on the current display area within the preview control, the whiteboard application controls the preview control to process the non-drawing-operation event. The preview control removes the automatic-hide task and calculates updated rendering data. The preview control is then triggered to refresh rendered content, and the preview-control rendering sub-thread performs rendering until rendering is completed.

To facilitate implementation of the display control method described above, embodiments of the present application further provide an apparatus based on the display control method. Terms used herein have the same meanings as those used in the display control method described above. Detailed implementation details may be referenced from the corresponding method embodiments and will not be repeated herein.

Referring to FIG. 10, FIG. 10 is a structural diagram of a display control apparatus according to an embodiment of the present application. The display control apparatus may be implemented in a terminal and may include a first display module 301, a first determination module 302, a second determination module 303, a third determination module 304, a fourth determination module 305, and a second display module 306.

The first display module 301 is configured to display a whiteboard interface, wherein the whiteboard interface is configured to display a display area currently in a display state in a whiteboard page.

The first determination module 302 is configured to, in response to a non-drawing operation performed on the whiteboard interface, determine a current display area that is in the display state in the whiteboard page after the non-drawing operation.

The second determination module 303 is configured to determine a content area containing all drawn content in the whiteboard page.

The third determination module 304 is configured to determine, based on the current display area and the content area, a target area, wherein the target area is a minimum area containing the current display area and the content area.

The fourth determination module 305 is configured to determine, based on a control display area of a preview control and the target area, a control display position of the target area in the preview control.

The second display module 306 is configured to display the target area at the control display position.

In some embodiments, the fourth determination module 305 comprises:
A first determination submodule configured to determine, according to a first size of the target area in the whiteboard page and a second size of the control display area, a scaling ratio for displaying the target area within the control display area.
A second determination submodule configured to determine a transformation matrix based on the first size, the second size, and the scaling ratio.
A third determination submodule configured to determine the control display position of the target area in the preview control according to the transformation matrix.

In some embodiments, the first size comprises a first width and a first height, and the second size comprises a second width and a second height. The first determination submodule is configured to:
Calculate a ratio of the first width to the second width to obtain a width ratio.
Calculate a ratio of the first height to the second height to obtain a height ratio.

Compare the width ratio and the height ratio and determine a larger one thereof as the scaling ratio.

In some embodiments, the second determination submodule is configured to:
Calculate a ratio of the first width to the scaling ratio to obtain a target width of the target area within the control display area.
Calculate a ratio of the first height to the scaling ratio to obtain a target height of the target area within the control display area,

Calculate one-half of a difference between the second width and the target width to obtain a target horizontal coordinate of an upper-left vertex of the target area within the control display area.

Calculate one-half of a difference between the second height and the target height to obtain a target vertical coordinate of the upper-left vertex of the target area within the control display area.

Determine the target horizontal coordinate and the target vertical coordinate as a first coordinate of the upper-left vertex of the target area in the preview control.

Determine the transformation matrix based on a second coordinate of the upper-left vertex of the target area in the whiteboard page, the first coordinate, and the scaling ratio.

In some embodiments, the apparatus further comprises:
A fifth determination module configured to determine whether a non-drawing operation is received for a first time.

A rendering module configured to, in response to determining that the non-drawing operation is received for the first time, render the content area and store the rendered content area in a designated storage area, and disable display of the preview control.

In some embodiments, the apparatus further comprises:
An acquisition module configured to, in response to determining that the non-drawing operation is not received for the first time, obtain the rendered content area from the designated storage area during display of the target area at the control display position, and display the content area at a target position corresponding to the content area within the control display area.

In some embodiments, the current display area within the preview control is displayed in a specified style. The apparatus further comprises:
A sixth determination module configured to, in response to a non-drawing operation performed on the current display area displayed in the specified style within the preview control, determine a current position of the current display area in the preview control.

A seventh determination module configured to determine an inverse transformation matrix according to the transformation matrix.

An eighth determination module configured to determine, based on the current position and the inverse transformation matrix, a changed position of the current display area within the whiteboard page.

An adjustment module configured to adjust the current display area in the whiteboard page to the changed position.

In the foregoing embodiments, descriptions of the respective embodiments emphasize different aspects. For portions not described in detail in a particular embodiment, reference may be made to the foregoing detailed description of the display control method, and such description will not be repeated herein.

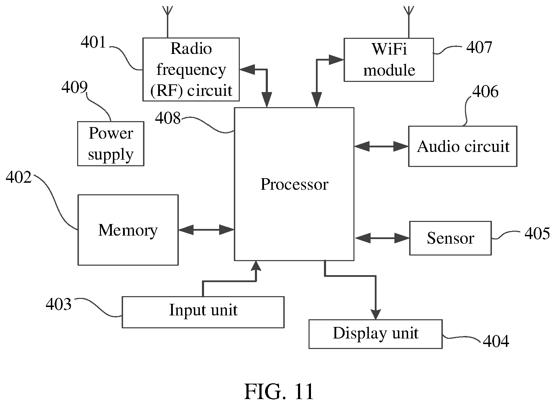

Embodiments of the present application further provide a computer device. The computer device may be a terminal. As shown in FIG. 11, FIG. 11 illustrates a structural diagram of a terminal according to an embodiment of the present application.

Specifically, the computer device may include a radio frequency (RF) circuit 401, a memory 402 including one or more computer-readable storage media, an input unit 403, a display unit 404, a sensor 405, an audio circuit 406, a WiFi module 407, a processor 408 including one or more processing cores, and a power supply 409. A person skilled in the art will appreciate that the terminal structure illustrated in FIG. 11 is merely exemplary and does not limit the terminal. The terminal may include more or fewer components than those illustrated, may combine certain components, or may employ a different arrangement of components.

The RF circuit 401 may be configured to receive and transmit signals during information exchange or calls. In particular, after receiving downlink information from a base station, the RF circuit 401 forwards the downlink information to one or more processors 408 for processing. In addition, the RF circuit 401 transmits uplink data to the base station. Generally, the RF circuit 401 may include, but is not limited to, an antenna, at least one amplifier, a tuner, one or more oscillators, a Subscriber Identity Module (SIM) card, a transceiver, a coupler, a Low Noise Amplifier (LNA), a duplexer, and the like. In addition, the RF circuit 401 may communicate with networks and other devices through wireless communication. The wireless communication may utilize any communication standard or protocol, including, but not limited to, a Global System for Mobile Communications (GSM), a General Packet Radio Service (GPRS), Code Division Multiple Access (CDMA), Wideband Code Division Multiple Access (WCDMA), Long Term Evolution (LTE), electronic mail, a Short Message Service (SMS), and the like.

The memory 402 may be configured to store software programs and modules. The processor 408 executes various functional applications and display control by running the software programs and modules stored in the memory 402. The memory 402 may mainly include a program storage area and a data storage area. The program storage area may store an operating system, application programs required by at least one function, such as a sound playback function and an image playback function, and the like. The data storage area may store data created according to use of the terminal, such as audio data, a phone book, and the like. In addition, the memory 402 may include a high-speed random access memory and may further include a non-volatile memory, such as at least one magnetic disk storage device, a flash memory device, or another volatile solid-state storage device. Correspondingly, the memory 402 may further include a memory controller to provide access to the memory 402 by the processor 408 and the input unit 403.

The input unit 403 may be configured to receive input numerical or character information and generate keyboard, mouse, joystick, optical, or trackball signal inputs related to user settings and function control. Specifically, in one particular embodiment, the input unit 403 may include a touch-sensitive surface and other input devices. The touch-sensitive surface, also referred to as a touch display screen or a touch panel, may collect touch operations performed by a user on or near the touch-sensitive surface, such as operations performed by the user using a finger, a stylus, or any other suitable object or accessory on or near the touch-sensitive surface, and may drive a corresponding connected device according to a preset program. Optionally, the touch-sensitive surface may include a touch detection device and a touch controller. The touch detection device detects a touch position of the user, detects a signal generated by a touch operation, and transmits the signal to the touch controller. The touch controller receives touch information from the touch detection device, converts the touch information into contact coordinates, transmits the contact coordinates to the processor 408, and receives and executes commands from the processor 408. In addition, the touch-sensitive surface may be implemented using various types, such as a resistive type, a capacitive type, an infrared type, or a surface acoustic wave type. In addition to the touch-sensitive surface, the input unit 403 may further include other input devices. Specifically, the other input devices may include, but are not limited to, one or more of a physical keyboard, function keys such as a volume control key and a power key, a trackball, a mouse, and a joystick.

The display unit 404 may be configured to display information input by the user, information provided to the user, and various graphical user interfaces of the terminal. The graphical user interfaces may be composed of graphics, text, icons, video, or any combination thereof. The display unit 404 may include a display panel. Optionally, the display panel may be configured in a form such as a Liquid Crystal Display (LCD) or an Organic Light-Emitting Diode (OLED). Further, the touch-sensitive surface may cover the display panel. After the touch-sensitive surface detects a touch operation on or near the touch-sensitive surface, the touch-sensitive surface transmits the touch operation to the processor 408 to determine a type of touch event. The processor 408 then provides corresponding visual output on the display panel according to the type of touch event. Although the touch-sensitive surface and the display panel are shown in FIG. 11 as two separate components for implementing input and output functions, respectively, in some embodiments, the touch-sensitive surface and the display panel may be integrated to implement both input and output functions.

The terminal may further include at least one sensor 405, such as a light sensor, a motion sensor, and other sensors. Specifically, the light sensor may include an ambient light sensor and a proximity sensor. The ambient light sensor may adjust brightness of the display panel according to ambient light intensity, and the proximity sensor may turn off the display panel and/or backlight when the terminal is moved close to an ear. As one type of motion sensor, an acceleration sensor may detect magnitudes of acceleration in various directions, generally along three axes, and may detect the magnitude and direction of gravity when stationary. The acceleration sensor may be used in applications for recognizing a posture of a mobile phone, such as switching between landscape and portrait orientations, related games, and magnetometer posture calibration, and in vibration-recognition-related functions, such as a pedometer and tapping detection. Other sensors that may be configured in the terminal, such as a gyroscope, a barometer, a hygrometer, a thermometer, and an infrared sensor, are not described in further detail herein.

The audio circuit 406, a speaker, and a microphone may provide an audio interface between the user and the terminal. The audio circuit 406 may convert received audio data into an electrical signal and transmit the electrical signal to the speaker, and the speaker converts the electrical signal into a sound signal for output. On the other hand, the microphone converts a collected sound signal into an electrical signal. The audio circuit 406 receives the electrical signal and converts the electrical signal into audio data, and then outputs the audio data to the processor 408 for processing. The processed audio data may be transmitted to another terminal through the RF circuit 401, or may be output to the memory 402 for further processing. The audio circuit 406 may further include an earphone jack to provide communication between an external earphone and the terminal.

WiFi is a short-distance wireless transmission technology. Through the WiFi module 407, the terminal may help the user send and receive emails, browse web pages, access streaming media, and the like, thereby providing the user with wireless broadband Internet access. Although FIG. 11 illustrates the WiFi module 407, it should be understood that the WiFi module 407 is not an essential component of the terminal and may be omitted as needed without changing the essence of the invention.

The processor 408 is a control center of the terminal. The processor 408 connects various parts of the mobile phone through various interfaces and lines, and executes various functions of the terminal and processes data by running or executing software programs and/or modules stored in the memory 402 and by invoking data stored in the memory 402, thereby performing overall monitoring of the mobile phone. Optionally, the processor 408 may include one or more processing cores. Preferably, the processor 408 may integrate an application processor and a modem processor. The application processor mainly processes an operating system, a user interface, application programs, and the like, and the modem processor mainly processes wireless communication. It should be understood that the modem processor may alternatively not be integrated into the processor 408.

The terminal further includes a power supply 409, such as a battery, configured to supply power to the respective components. Preferably, the power supply may be logically connected to the processor 408 through a power management system, thereby implementing functions such as charging management, discharging management, and power consumption management through the power management system. The power supply 409 may further include any component such as one or more direct-current or alternating-current power supplies, a recharging system, a power failure detection circuit, a power converter or inverter, and a power status indicator.

Although not shown, the terminal may further include a camera, a Bluetooth module, and the like, which are not described in further detail herein. Specifically, in this embodiment, the processor 408 in the terminal loads executable files corresponding to processes of one or more application programs into the memory 402 according to instructions, and the processor 408 runs the executable files to perform the following operations: Displaying a whiteboard interface, wherein the whiteboard interface is configured to display a display area currently in a display state in a whiteboard page.

In response to a non-drawing operation performed on the whiteboard interface, determining a current display area that is in the display state in the whiteboard page after the non-drawing operation.

Determining a content area containing all drawn content in the whiteboard page.

Determining, based on the current display area and the content area, a target area, wherein the target area is a minimum area containing the current display area and the content area.

Determining, based on a control display area of a preview control and the target area, a control display position of the target area in the preview control.

Displaying the target area at the control display position.

In the foregoing embodiments, descriptions of the respective embodiments emphasize different aspects. For portions not described in detail in a particular embodiment, reference may be made to the foregoing detailed description of the display control method, and such description will not be repeated herein.

A person of ordinary skill in the art may understand that all or part of the steps of the methods in the foregoing embodiments may be implemented by instructions, or by instructions controlling related hardware. The instructions may be stored in a computer-readable storage medium and loaded and executed by a processor.

Accordingly, embodiments of the present application provide a computer-readable storage medium storing a plurality of instructions. The instructions may be loaded by a processor to perform steps of any display control method provided in the embodiments of the present application. For example, the instructions may perform the following steps:
Displaying a whiteboard interface, wherein the whiteboard interface is configured to display a display area currently in a display state in a whiteboard page.

In response to a non-drawing operation performed on the whiteboard interface, determining a current display area that is in the display state in the whiteboard page after the non-drawing operation.

Determining a content area containing all drawn content in the whiteboard page.

Determining, based on the current display area and the content area, a target area, wherein the target area is a minimum area containing the current display area and the content area.

Determining, based on a control display area of a preview control and the target area, a control display position of the target area in the preview control.

Displaying the target area at the control display position.

According to an aspect of the present application, a computer program product or a computer program is provided. The computer program product or the computer program includes computer instructions stored in a computer-readable storage medium. A processor of a computer device reads the computer instructions from the computer-readable storage medium and executes the computer instructions, such that the computer device performs the methods provided in the various optional implementations of the foregoing embodiments.

Specific implementations of the foregoing operations may be referenced from the previous embodiments and are not repeated herein.

The computer-readable storage medium may include a Read Only Memory (ROM), a Random Access Memory (RAM), a magnetic disk, an optical disk, or the like.

Since the instructions stored in the computer-readable storage medium may perform the steps of any display control method provided in the embodiments of the present application, the advantageous effects achievable by any display control method provided in the embodiments of the present application may be achieved. Details may be referenced from the previous embodiments and are not repeated herein.

A display control method, an apparatus, and a computer-readable storage medium provided by embodiments of the present application have been described in detail above. Specific examples are used herein to explain the principles and implementations of the present application. The descriptions of the foregoing embodiments are merely intended to facilitate understanding of the method and core concept of the present application. Meanwhile, a person skilled in the art may make changes to the specific implementations and application scope according to the concept of the present application. Therefore, the contents of the present specification should not be construed as limiting the present application.

## Claims

1. A display control method, comprising:
displaying a whiteboard interface, wherein the whiteboard interface is configured to display a display area currently in a display state in a whiteboard page;
in response to a non-drawing operation performed on the whiteboard interface, determining a current display area that is in the display state in the whiteboard page after the non-drawing operation;
determining a content area containing all drawn content in the whiteboard page;
determining, based on the current display area and the content area, a target area, wherein the target area is a minimum area containing the current display area and the content area;
determining, based on a control display area of a preview control and the target area, a control display position of the target area in the preview control; and
displaying the target area at the control display position.

2. The display control method of claim 1, wherein the step of determining the control display position of the target area in the preview control based on the control display area of the preview control and the target area comprises:
determining, according to a first size of the target area in the whiteboard page and a second size of the control display area, a scaling ratio for displaying the target area within the control display area;
determining a transformation matrix based on the first size, the second size, and the scaling ratio; and
determining the control display position of the target area in the preview control according to the transformation matrix.

3. The display control method of claim 2, wherein the first size comprises a first width and a first height, and the second size comprises a second width and a second height, and wherein the step of determining the scaling ratio for displaying the target area within the control display area according to the first size of the target area in the whiteboard page and the second size of the control display area comprises:
calculating a ratio of the first width to the second width to obtain a width ratio;
calculating a ratio of the first height to the second height to obtain a height ratio; and
comparing the width ratio and the height ratio, and determining a larger one of the width ratio and the height ratio as the scaling ratio.

4. The display control method of claim 3, wherein the step of determining the transformation matrix based on the first size, the second size, and the scaling ratio comprises:
calculating a ratio of the first width to the scaling ratio to obtain a target width of the target area within the control display area;
calculating a ratio of the first height to the scaling ratio to obtain a target height of the target area within the control display area;
calculating one-half of a difference between the second width and the target width to obtain a target horizontal coordinate of an upper-left vertex of the target area within the control display area;
calculating one-half of a difference between the second height and the target height to obtain a target vertical coordinate of the upper-left vertex of the target area within the control display area;
determining the target horizontal coordinate and the target vertical coordinate as a first coordinate of the upper-left vertex of the target area in the preview control; and
determining the transformation matrix based on a second coordinate of the upper-left vertex of the target area in the whiteboard page, the first coordinate, and the scaling ratio.

5. The display control method of claim 4, wherein the non-drawing operation is a panning operation; and
wherein determining the transformation matrix based on the second coordinate of the upper-left vertex of the target area in the whiteboard page, the first coordinate, and the scaling ratio comprises:
calculating a difference between the target horizontal coordinate and a horizontal coordinate included in the second coordinate to obtain a horizontal translation amount;
calculating a difference between the target vertical coordinate and a vertical coordinate included in the second coordinate to obtain a vertical translation amount; and
determining the transformation matrix based on the horizontal translation amount and the vertical translation amount.

6. The display control method of claim 4, wherein the non-drawing operation is a zooming operation; and
wherein determining the transformation matrix based on the second coordinate of the upper-left vertex of the target area in the whiteboard page, the first coordinate, and the scaling ratio comprises:
determining the transformation matrix as:
(the scaling ratio, the horizontal coordinate of the second coordinate, and the vertical coordinate of the second coordinate).

7. The display control method of claim 4, wherein the non-drawing operation comprises a panning operation and a zooming operation; and
wherein determining the transformation matrix based on the second coordinate of the upper-left vertex of the target area in the whiteboard page, the first coordinate, and the scaling ratio comprises:
determining the transformation matrix as a product of a translation transformation matrix and a scaling transformation matrix.

8. The display control method of claim 1, wherein, after the step of responding to the non-drawing operation performed on the whiteboard interface, the method further comprises:
determining whether the non-drawing operation is received for a first time; and
in response to determining that the non-drawing operation is received for the first time, rendering the content area and storing the rendered content area in a designated storage area, and disabling display of the preview control

9. The display control method of claim 8, wherein the method further comprises:
in response to determining that the non-drawing operation is not received for the first time, during the displaying of the target area at the control display position, obtaining the rendered content area from the designated storage area, and displaying the content area at a target position corresponding to the content area within the control display area.

10. The display control method of claim 1, wherein the current display area within the preview control is displayed in a specified style, and wherein, after the step of displaying the target area at the control display position, the method further comprises:
in response to a non-drawing operation performed on the current display area displayed in the specified style within the preview control, determining a current position of the current display area in the preview control;
determining an inverse transformation matrix according to the transformation matrix;
determining, based on the current position and the inverse transformation matrix, a changed position of the current display area in the whiteboard page; and
adjusting the current display area in the whiteboard page to the changed position.

11. The display control method of claim 10, wherein determining the inverse transformation matrix according to the transformation matrix comprises:
performing a sign inversion operation on numerical values in a translation transformation matrix to obtain an inverse translation transformation matrix.

12. The display control method of claim 10, wherein determining the inverse transformation matrix according to the transformation matrix comprises:
performing a reciprocal operation on a scaling ratio in a scaling transformation matrix to obtain an inverse scaling transformation matrix.

13. The display control method of claim 1, wherein displaying the target area at the control display position comprises:
displaying each point in the target area at a corresponding position within the control display position according to the determined control display position.

14. The display control method of claim 1, wherein the method further comprises:
after a whiteboard application is launched, initializing the preview control;
triggering the preview control to enter a data and state initialization stage;
monitoring lifecycle changes of the whiteboard page, and registering with the whiteboard to perform cleanup processing when the whiteboard page is closed;
after the registration is completed, starting a preview-control rendering sub-thread and waiting for a rendering task;
after the preview-control rendering sub-thread has started, starting a cached bitmap rendering sub-thread and waiting for a task of displaying the content area in a cached bitmap; and
after the cached bitmap rendering sub-thread has started, completing initialization of the preview control and completing initialization of the whiteboard.

15. The display control method of claim 14, wherein the method further comprises:
after initialization of the preview control is completed, causing the whiteboard to invoke a display-start procedure;
obtaining, from the whiteboard page, background information of the whiteboard page, scaling information, and an element-rendering snapshot list;
generating control rendering information and triggering a rendering procedure of the preview control;
rendering the snapshot list at a designated position of a cached bitmap;
updating a control state of the preview control and triggering a control-rendering sub-thread to refresh display of the control, wherein the control-rendering sub-thread renders a background, renders the cached bitmap in a target area of the preview control, and renders a foreground; and
generating an instance for updating the preview control and displaying the instance in the preview control.

16. The display control method of claim 15, wherein the method further comprises:
while the preview control is being displayed, invoking an update interface to update display of the control, hiding a delayed-close task of the preview control, and generating latest rendering information;
triggering the preview control to update rendering;
causing the rendering sub-thread to render a background, render the cached bitmap in the target area of the preview control, and render a foreground; and
notifying the preview control that rendering has been completed, whereby updating of the control state of the preview control is completed.

17. The display control method of claim 16, wherein the method further comprises:
when the non-drawing operation stops, invoking a delayed-close interface to trigger the preview control to be automatically hidden after a preset delay time;
triggering a delayed-close task; and
when the task associated with the preset delay time is not canceled, hiding the preview control.

18. The display control method of claim 17, wherein the method further comprises:
when a non-drawing operation is performed on the current display area within the preview control, controlling the preview control to process a non-drawing-operation event;
causing the preview control to remove an automatic-hide task and calculate updated rendering data; and
triggering the preview control to refresh rendered content, wherein a preview-control rendering sub-thread performs rendering until the rendering is completed.

19. A non-transitory computer-readable storage medium, storing instructions thereon, the instructions, when loaded and executed by a processor, causing the processor to perform the steps of the display control method according to any one of claims 1-18.

20. A computer device, comprising:
a memory; and
a processor coupled to the memory and configured to execute a computer program stored in the memory,
wherein execution of the computer program causes the processor to perform the steps of the display control method according to any one of claims 1-18.
